## Europäisches Patentamt
## European Patent Office
## Office européen des brevets

(19)

(11) Veröffentlichungsnummer : **0 078 268**
**B1**

(12) **EUROPÄISCHE PATENTSCHRIFT**

(45) Veröffentlichungstag der Patentschrift : 12.02.86

(51) Int. Cl.⁴ : **B 01 D   3/42**

(21) Anmeldenummer : 82900987.7

(22) Anmeldetag : 07.04.82

(86) Internationale Anmeldenummer : PCT/HU 82/00013

(87) Internationale Veröffentlichungsnummer : WO/8203992 (25.11.82 Gazette 82/28)

(54) PRÜFANLAGE FÜR DIE VORAUSBESTIMMUNG DES WIRKUNGSGRADES DER BÖDEN VON DESTILLIER- UND/ODER ABSORPTIONSKOLONNEN.

(30) Priorität : 14.05.81 HU 132981

(43) Veröffentlichungstag der Anmeldung : 11.05.83 Patentblatt 83/19

(45) Bekanntmachung des Hinweises auf die Patenterteilung : 12.02.86 Patentblatt 86/07

(84) Benannte Vertragsstaaten : AT CH DE FR GB LI NL SE

(56) Entgegenhaltungen :
US-A- 2 945 127
US-A- 3 003 928

(73) Patentinhaber : GYÖKHEGYI, Laszlo
Mányoki ut 5
H-1118 Budapest (HU)

(72) Erfinder : GYÖKHEGYI, Laszlo
Mányoki ut 5
H-1118 Budapest (HU)

(74) Vertreter : Patentanwälte Viering & Jentschura
Steinsdorfstrasse 6
D-8000 München 22 (DE)

EP 0 078 268 B1

## Beschreibung

Die Erfindung betrifft eine Prüfanlage zur Ermittlung der effektiven Bodenzahl von Destillier- und/oder Absorptionskolonnen, deren effektive Bodenzahl mithilfe dieser Prüfanlage ermittelt werden kann.

Die für die gestellte Trennaufgabe erforderliche effektive Bodenzahl von Bodenkolonnen zur Destillation und/oder Absorption wird durch die Industrie bis heute in der Weise bestimmt, daß zunächst die zur Lösung der Aufgabe nötige sogenannte theoretische Bodenzahl ermittelt wird und dann die einzelnen Böden bei Kenntnis des aus der theoretischen Berechnung sich ergebenden Dampf- oder Gas- sowie Flüssigkeitsdurchsatzes konstruiert werden.

Ferner wird der sogenannte Bodenwirkungsgrad der Böden abgeschätzt, durch dessen Zahlenwert die bereits bekannte theoretische Bodenzahl geteilt wird, wodurch man die effektive Bodenzahl erhält.

Zur Erhöhung der Aussagekraft der Wirkungsgradabschätzung baut man im allgemeinen für jeden Kolonnenteil unterschiedlichen Durchmessers oder unterschiedlicher Belastung (z. B. für die Abtriebs- und für die Rektifiziersäule) je drei Böden. Durch die Böden wird in den zu diesem Zweck hergestellten Apparat Luft geblasen, während von oben den Böden Wasser zuströmt. Von den untersuchten Böden dienen der oberste Boden der wirklichkeitsechten Wasserverteilung und der unterste Boden der Luftstromverteilung.

Es ist vor allem bei Böden großen Durchmessers weniger aufwendig, für den jeweiligen untersten Boden einen Luftstromverteiler einzusetzen, durch den das Abfließen des Wassers gegen die aufsteigende Luft nicht gehindert wird. In diesem Fall sollen außer dem Luftstromverteiler für jeden Kolonnenteil lediglich zwei Böden gebaut und untersucht werden.

Im Verlauf dieser hydraulischen Untersuchungen werden zum Teil die minimalen und maximalen Werte des durch die Böden zu führenden Luft- und Wasserdurchsatzes, zum Teil der Strömungswiderstand der Böden (der im Luftstrom auftretende sogenannte Druckverlust) gemessen.

Zur Unterstützung der Wirkungsgradabschätzung wird das Arbeiten der Böden auch visuell beobachtet. Die subjektive Wertung dieser visuellen Beobachtung kann zur Korrektur dieser oder jener Konstruktionsabmessung führen, während ein als richtig gefundenes Arbeiten der Böden die Annahme eines höheren Wirkungsgrades erlaubt.

An der Unsicherheit der Abschätzung des Wirkungsgrades ändert sich dadurch natürlich nichts. Dies führt deshalb selbst bei Firmen, die über viel Erfahrung verfügen, zu einer beachtlichen Überdimensionierung der effektiven Bodenzahl der Kolonnen. Durch die Überdimensionierung werden große zusätzliche Investitionskosten herbeigeführt.

Der Bau einer Bodenkolonne für Destillations- und/oder Absorptionszwecke beginnt mit der speziellen Aufgabenstellung und durchläuft die folgenden Stufen :

a) Die Erarbeitung der theoretischen Grundlagen der Trennaufgabe, die mit der Bestimmung der theoretischen Bodenzahl endet.

b) Kontrolluntersuchungen im Labor- und Technikumsmaßstab.

c) Projektierung, einschließlich Festlegung des Kolonnendurchmessers, des Bodenabstandes sowie der konstruktiven Abmessungen der einzelnen Böden ; eventuell eine Überprüfung der Projektierung solcher Böden, die sich für eine ähnliche Aufgabe bereits bewährt haben.

d) Der Bau von drei-drei Böden, oder der von zwei-zwei Böden sowie je eines Verteilers in Vertretung von Böden, die sich voneinander im Durchmesser unterscheiden und die für je einen Kolonnenteil kennzeichnend sind.

e) Die hydraulische Untersuchung der im Punkt d) erwähnten Böden.

f) Die Abschätzung des durchschnittlichen Wirkungsgrades der untersuchten Böden ; eventuell die Änderung der Bodenkonstruktion.

g) Die Ermittlung der effektiven Bodenzahl der Kolonne.

h) Die Durchführung der Festigkeitsberechnungen und dergleichen der Kolonne.

i) Der Bau der Kolonne.

k) Die Aufstellung, Montage, Bemalung, das Anstreichen, das Isolieren sowie die Blecharbeiten usw. des Gerüstes und anderer Apparate des Aggregates.

l) Druckproben, Probefahrt, Inbetriebsetzung.

Die Erfindung betrifft — wie bereits definiert — die Prüfanlage gemäß den Punkten e) — g).

Die hydraulischen Untersuchungen haben ein doppeltes Ziel :

1. Die Messung des Druckverlustes, der durch die geplanten Dampf- oder Gas- und Flüssigkeitsdurchsätze herbeigeführt wird, sowie der Kapazitätsgrenzen mit dem Testsystem Luft-Wasser.

2. Die visuelle Beobachtung des Bodenbetriebes bei den gleichen Durchsätzen.

Die Druckverlustmessung wirft keine besonderen Probleme auf. Die mit dem System Luft-Wasser gewonnenen Ergebnisse informieren teils zuverlässig, teils lassen sie sich auf andere Gemische umrechnen. Dasselbe gilt auch für die mit Luft-Wasser festgelegten Kapazitätsgrenzen (F.J. Zuiderweg — D. van der Meer : Chemische Technik *24*, 1. 1972. 10-14).

Die Überprüfung des Bodenbetriebs ist deshalb erforderlich, weil zu einer exakten Bestimmung des Bodenwirkungsgrades bis heute noch keine Möglichkeit bestand. In Ermangelung einer wissenschaft-

2

lichen Grundlage wird der Bodenwirkungsgrad nur abgeschätzt (J.H. Perry : Chemical Engineer's Handbook, McGraw-Hill Book Company, New York, Toronto, London, 1963. 4. Edition, 18-16). Die Überprüfung des Bodenbetriebes mit dem System Luft-Wasser zielt auf die Möglichkeit einer Genauigkeitserhöhung der Abschätzung ab. Eine derartige Prüfanlage wird beinahe von allen Fachfirmen betrieben. Eine detaillierte Beschreibung darüber findet man in der Betriebsausgabe der Arbeitsgemeinschaft Chemische Verfahrenstechnik, Köln : Im Dienste der chemischen Industrie, S. 28.

Die mit Luft-Wasser beaufschlagten Böden werden in der Prüfanlage mangels einer exakten meßtechnischen Praxis nur visuell beobachtet. Auch die Beobachtungen lassen sich nur empirisch auswerten.

Eine ähnliche Prüfanlage beschreibt R. Billet (Industrielle Destillation, Verlag Chemie GmbH, Weinheim/Bergstraße, 1973, 178-181) mit dem Unterschied, daß der Bodendurchmesser dieser Anlage nur 1,67 m beträgt, während in der oben erwähnten Anlage auch wesentlich größere Böden überprüft werden können. Die im Buch von R. Billet beschriebene Anlage kann jedoch nicht nur mit Luft-Wasser, sondern auch mit anderen nicht korrodierenden Gasen und Kohlenwasserstofflüssigkeiten betrieben werden. Die Umrechnung der in dieser Anlage durchgeführten visuellen Beobachtungen auf größere Böden stellt eine weitere, gleichfalls empirische Aufgabe dar.

Es ist auch bekannt, daß in den 1950-er Jahren durch eine großangelegte Versuchsarbeit Beziehungen zur Vorausberechnung des Wirkungsgrades von Glockenböden bzw. Kolonnen für Zweistoffgemischtrennungen entwickelt wurden. Das Resultat dieser Versuchsarbeit ist von dem American Institute of Chemical Engineers in Bubble Tray Design Manual (The science Press. Inc. New York, 1958) veröffentlicht worden. Die seitdem vergangene Zeit hat die Möglichkeit, diese Beziehungen zu verallgemeinern, teils in Frage gestellt, teils sind auch hier Überdimensionierungen bekannt geworden, die die Berechnungsmethode mit sich bringt (P.K. Lashmet -S.Z. Szczepanski : Ind. Eng. Chem. Proc. Design and Dev. *13*, 2. 1974. S. 103-106). Der Grad der Überdimensionierung beträgt bei Kolonnen mit verhältnismäßig niedriger Bodenzahl durchschnittlich 28 %, bei Kolonnen mit vielen Böden im Durchschnitt 7 %.

Die visuellen Beobachtungen mit dem System Luft-Wasser ermöglichen es, auffallende Konstruktionsfehler (z. B. : Totwassergebiete, zu niedriger statischer Flüssigkeitsverschluß bzw. zu niedrige Wehrhöhe) zu beseitigen und somit eine neue Bodenkonstruktion auszugestalten. Auch letztere wird natürlich der üblichen Kontrolle mit Luft-Wasser unterworfen.

Besteht die geplante Kolonne aus Böden, die hinsichtlich aller geometrischen Abmessungen nicht gleich sind, so werden die Druckverlust- und Kapazitätsmessungen sowie die visuellen Beobachtungen jeweils mit allen für jeden Kolonnenteil kennzeichnenden Böden durchgeführt und, falls erforderlich, die erwähnten Konstruktionsänderungen vorgenommen.

Die Grundlage der in den oben angegebenen Punkten f) und g) erwähnten visuellen Beobachtungen mittels Luft-Wasser ist es, daß, wenn die Bauelemente der Böden (beispielsweise Glocken oder Ventile oder Bohrungen usw.) gleichmäßig arbeiten und wenn eine gleichmäßige Wehrüberhöhung festzustellen ist, der Bodenwirkungsgrad in der chemischen sowie petrochemischen Industrie zwischen nachstehenden Werten schwanken kann :

Äthylalkohol-Wasser : 0,6-0,8

andere organische Gemische : 0,5-0,6

(R. Billet : Industrielle Destillation, Verlag Chemie GmbH, Weinheim/Bergstraße, 1973. S. 319).

Dividiert man die bereits ermittelte theoretische Bodenzahl durch die obigen Werte, so ergibt sich die effektive Bodenzahl der Kolonne.

Durch die Erfindung wird eine Prüfanlage geschaffen, mit denen sich ein exakter Wirkungsgrad der Böden gleicher Geometrie und/oder gleicher Belastung für die Berechnung der effektiven Bodenzahl von Destillier- und/oder Absorptionskolonnen ohne Sicherheitszuschlag bestimmen läßt, so daß sich eine unnötige Überdimensionierung der Bodenzahl von Kolonnen vermeiden läßt, wodurch die Gesamtinvestitions- sowie Betriebskosten kompletter Destillier- und/oder Absorptionsaggregate bei sicherer Betriebsweise reduziert werden können.

Die Erfindung beruht primär auf der Erkenntnis, daß jede Bodengruppe als eine sogenannte Rührkaskade betrachtet werden kann, die aus hintereinander geschalteten Rührgefäßen besteht, deren Flüssigkeitsinhalt durch den von unten nach oben geleiteten Dampf oder durch ein Gas, im vorliegenden Falle durch Luft, gerührt wird. Daraus folgt, daß, wenn man das Verweilzeitspektrum eines in der eingesetzten Flüssigkeit, vorzugsweise Wasser, löslichen, nicht flüchtigen Stoffes, der in das dem obersten, gegebenenfalls mittleren Boden einer Bodengruppe zugeleitete Wasser dosiert wird, durch Messungen auf den Böden festlegt und wenn man aufgrund der Meßergebnisse den für das System Luft-Wasser gültigen Wirkungsgrad der Böden errechnet (P. Grassmann : Physikalische Grundlagen der Chemie-Ingenieur Technik. Verlag H.R. Säuerländer und Co. Aarau und Frankfurt/M. 1961. S. 494-499. und M. Zogg : Technische Rundschau *44*, Nov. 1. 1977. S. 3-5), sich die für das zu trennende Gemisch gültige effektive Bodenzahl der Destillier- und/oder Absorptionskolonne mit Hilfe jeder hierfür bekannten Methode (Bakowski : Chem. Eng. Sci. *1*, 1957. S. 226 und J.F. Walter und T.K. Sherwood : Ind. Eng. Chem. *33*, 1941. S 493) anstelle der bisher angewendeten Abschätzung mit dem Ergebnis genau berechnen läßt, daß komplette Destillier- und/oder Absorptionsaggregate nicht — in nunmehr überflüssiger Weise — überdimensioniert zu werden brauchen.

Eine weitere Grundlage der Erfindung ist die Erkenntnis, daß die Prüfanlage zur Bestimmung der Ausgangsgröße für die exakte Berechnung der effektiven Bodenzahl von Destillier- und/oder Absorptionskolonnen aus an sich bekannten Teilen — Apparaten, Einrichtungen, Meßgeräten, Behältern, Pumpen, gegebenenfalls aus einem zur Auswertung erforderlichen Rechenautomaten — aufgebaut werden kann, die jedoch zu einer einzigen technologischen Reihe nach einem bestimmten Schema sowie durch eine gemeinsame Anwendung zur exakten Bestimmung der Bodenzahl von Kolonnen — ohne Sicherheitszuschlag — bisher noch nicht zusammengeschaltet wurden (z. B. das zur Bestimmung des Verweilzeitspektrums erforderliche, den wasserlöslichen Stoff aufnehmende Dosiergefäß, der Sammelbehälter, das Meßgerät, die Meßelektroden und Bodengruppe usw.).

Aufgrund der oben beschriebenen Erkenntnisse wird die gestellte Aufgabe durch die Erfindung gemäß dem Anspruch 1 gelöst. Bevorzugte Ausgestaltungen der Erfindung ergeben sich aus den Ansprüchen 2 bis 9.

Gemäß der Erfindung erfolgt die Messung des Verweilzeitspektrums der zugeführten Flüssigkeit wenigstens auf dem einen Boden der Bodengruppe. Zur Messung des Verweilzeitspektrums der zugeführten Flüssigkeit kann in diese ein Tracerstoff, der entweder ein in der Flüssigkeit löslicher, nicht flüchtiger radioaktiver Stoff oder ein Elektrolyt oder ein Farbstoff sein kann, impulsartig eindosiert werden, wonach die Konzentration oder ein von der Konzentration linear abhängiger physikalischchemischer Kennwert des Tracerstoffes wenigstens in der abfließenden Flüssigkeit zeitabhängig gemessen wird. Anstelle eines Tracerstoffes, der impulsartig in die zugeführte Flüssigkeit eindosiert wird, kann für die Messung des Verweilzeitspektrums als Tracerlösung auch die Lösung entweder eines nicht flüchtigen radioaktiven Stoffes oder eines Elektrolyten oder eines Farbstoffes verwendet werden, wobei der Zulauf der Bodengruppe auf die Tracerlösung umgeschaltet wird, die dadurch der Bodengruppe anstelle der vorher zugeführten Flüssigkeit kontinuierlich zugeleitet wird, wonach die Konzentration des in der Tracerlösung gelösten Tracerstoffes oder ein von der Konzentration abhängiger physikalisch-chemischer Kennwert des gelösten Tracerstoffes in der abfließenden Flüssigkeit zeitabhängig gemessen wird. Das Verweilzeitspektrum ist nach beiden Betriebsarten die Funktion des gemessenen Konzentrationswertes des Tracerstoffes oder dessen von der Konzentration abhängigen Kennwertes von der Zeit.

Die Flüssigkeit bzw. die Tracerlösung wird dem obersten, oder gegebenenfalls dem mittleren Boden einer Bodengruppe, die aus mindestens drei Böden gleicher Geometrie oder mindestens zwei Böden und einem Luftstromverteiler besteht, zugeleitet, dann der für das System gültige Bodenwirkungsgrad der untersuchten Böden aus dem gemessenen Verweilzeitspektrum errechnet und die effektive Bodenzahl der Destillier- und/oder Absorptionskolonne gleicher Geometrie oder gleicher Belastung anhand dieses Wirkungsgrades in bekannter Weise bestimmt. Im Falle einer Destillier- und/oder Absorptionskolonne, die aus Teilen unterschiedlicher Geometrie oder unterschiedlicher Belastung besteht, wird für jeden dieser Teile die Messung wiederholt und dann werden die für die Kolonnenteile errechneten effektiven Bodenzahlen summiert.

Mithilfe der erfindungsgemäßen Prüfanlage ergibt sich eine Destillier- und/oder Absorptionskolonne, deren effektive Bodenzahl

$$N_{eff} = N_{th} \left( 1 - \frac{\Delta tm}{\Delta t} \right) n_{eff}$$

ist, wobei

$N_{th}$ — die theoretische Bodenzahl der Kolonne

$n_{eff}$ — die effektive Bodenzahl einer vorgegebenen Bodengruppe

$\Delta t$ — die Differenz der Mittelwerte der Verweilzeitspektren, gemessen in dem vom untersten Boden abfließenden und in dem dem obersten Boden zugeleiteten Wasser,

$\Delta tm$ — die Differenz der Lagen der Maxima der Verweilzeitspektren, gemessen in dem vom untersten Boden abfließenden und in dem dem obersten Boden zugeleiteten Wasser

bedeutet.

Unter Mittelwert des Verweilzeitspektrums wird dabei der jenige Zeitraum verstanden, der zwischen dem Zeitpunkt des impulsartigen Eindosierens des Tracerstoffes in das dem obersten Boden zugeführte Wasser und der Hälfte der Verweilzeit des Tracerstoffes an der Meßstelle, d. i. des Zeitraums zwischen dem ersten Auftreten des Tracerstoffes an der Meßstelle und dem Verschwinden des Tracerstoffes an der Meßstelle, verstreicht. Entsprechend wird unter der « Lage des Maximums des Verweilzeitspektrums » derjenige Zeitraum verstanden, der zwischen dem Zeitpunkt des impulsartigen Eindosierens des Tracerstoffes in das dem obersten Boden zugeführte Wasser und demjenigen Zeitpunkt verstreicht, in welchem an der Meßstelle das Maximum des Konzentrationswertes bzw. des davon abhängigen Kennwertes des Tracerstoffes gemessen wird.

Folgende Vorteile verbinden sich mit der Erfindung :

1. Zum ersten Mal ist es durch die Erfindung gelungen, die effektive Bodenzahl von Destillier- und/oder Absorptionskolonnen unter Zugrundelegung der theoretischen Bodenzahl in exakter Weise jedoch ohne Sicherheitszuschlag zu bestimmen, anstatt den Bodenwirkungsgrad zu schätzen. Infolgedessen können die bisherigen Wirkungsgradschwankungen durch eine Auswertung auf wissenschaftlichen Grundlagen beseitigt werden, wodurch bei dem Gemisch Äthylalkohol-Wasser eine 33 %ige, bei anderen organischen Gemischen eine 20 %ige, im Durchschnitt also eine 25 %ige Wirkungsgradsteigerung pro Anwendungsfall, also eine Einsparung an Böden, die gleichfalls 25 % ausmacht, erreicht werden kann.

2. Wird eine Kolonne mit einer ziemlich niedrigen Bodenzahl (z. B. 40) zugrundegelegt, — die chemische und petrochemische Industrie arbeitet mit viel mehr Böden — dann werden durch die Genauigkeitsverbesserung des erfindungsgemäß meßbaren Wirkungsgrades 10 Böden überflüssig.

3. Die Einsparung bezüglich des ganzen Destillieraggregates beträgt bei Kolonnen mit vielen Böden 7 %.

4. Die erreichbare durchschnittliche Einsparung, die durch die erfindungsgemäße exakte Wirkungsgradbestimmung im Vergleich zum heutigen Zustand erzielt werden kann, gilt für jedes Kolonnensystem.

5. Die für die einzelnen Kolonnensysteme nachgewiesene Einsparung bewirkt eine Verminderung der Gesamtinvestitionskosten des kompletten Destillieraggregates. Die Ersparnis an den Investitions-Gesamtkosten hängt natürlich vor allem von der Bodenzahlverminderung, vom Kolonnendurchmesser und vom Werkstoff ab (R.F. Sommerville : Chem. Eng. 71-76 1972). Gleichfalls setzen sich infolge des kleiner gewordenen Energieaufwandes auch die Betriebskosten herab.

6. Zur Verwirklichung der erfindungsgemäßen Anlage können die bisher bekannten Einrichtungen beibehalten werden, die man für die mit dem System Luft-Wasser durchgeführten visuellen Beobachtungen sowie für die Druckverlustmessungen benötigte ; sie müssen lediglich durch die Erfordernisse der erfindungsgemäßen Tracertechnik ergänzt werden.

7. Zur Bestimmung des destillativen Wirkungsgrades kann nunmehr das billige, unschwer beschaffbare, gefahrlose System Luft-Wasser eingesetzt werden, nicht braucht dagegen das zu trennende Gemisch selbst eingesetzt zu werden.

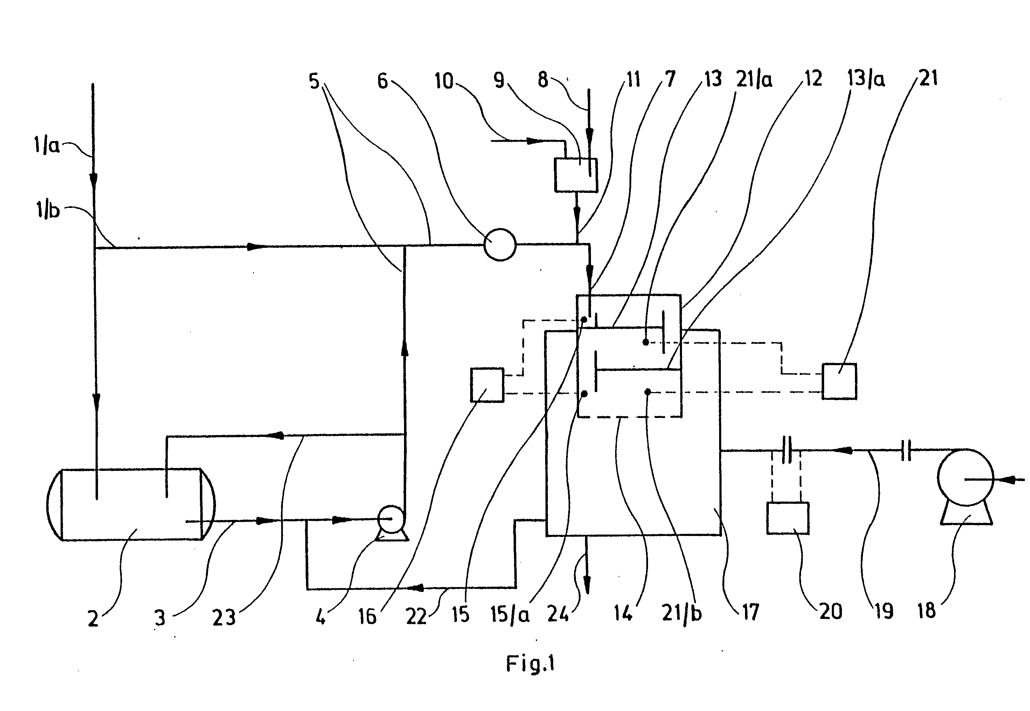

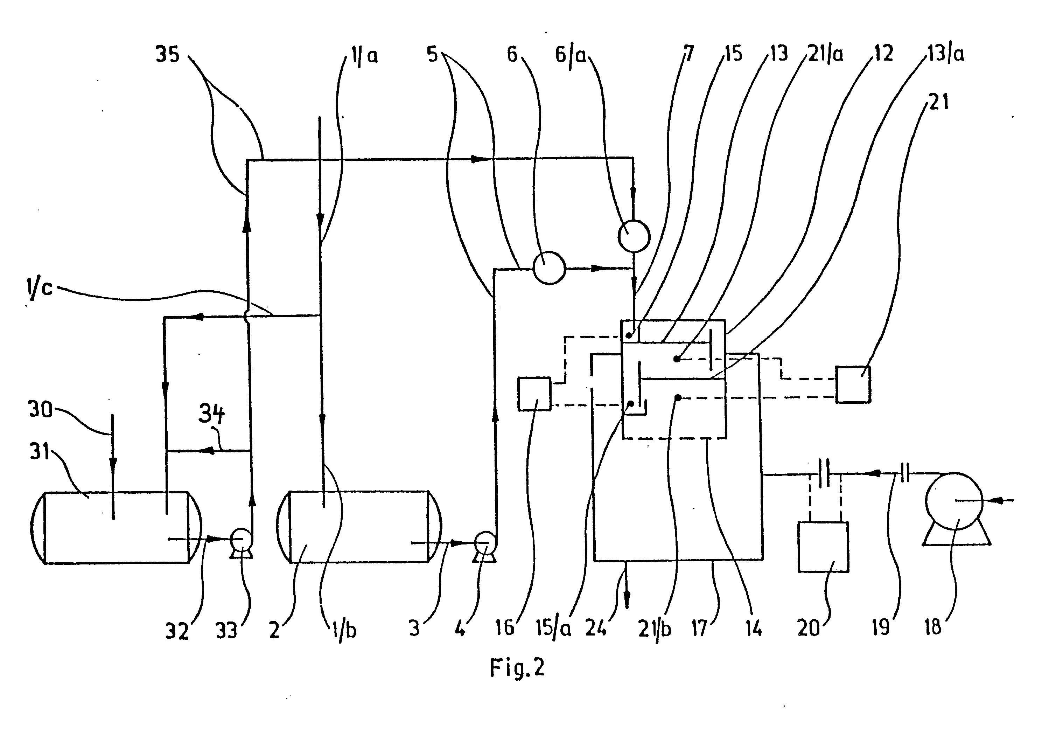

Die Erfindung wird im folgenden anhand der beigefügten Fig. 1 und 2 eingehend erläutert. Die Fig. 1 zeigt ein schematisches Fließschema der Prüfanlage für ein vorteilhaftes Ausführungsbeispiel der Betriebsart a) zur Durchführung der Impulstechnik. Die Fig. 2 zeigt das gleiche für ein vorteilhaftes Ausführungsbeispiel der Betriebsart b) zur Durchführung der Verdrängungstechnik.

In den Figuren sind die Pfeile, die die Stoffströme angeben, an den an die einzelnen Einrichtungen angeschlossenen Leitungen dargestellt, wodurch auch der Ablauf der in der Anlage stattfindenden Betriebsweise abgelesen werden kann.

Vor einer eingehenden Betrachtung der Einrichtungen wird festgestellt, daß zu diesen an den erforderlichen Stellen sowie in der erforderlichen Anzahl an sich bekannte Ventile, Belüftungsleitungen oder andere Armaturen usw. sinngemäß gehören können, die in der Zeichnung der besseren Übersicht halber nicht dargestellt wurden, wobei ihre Lage und Bestimmung dem Fachmann offenkundig sind. In der Zeichnung erscheinen die einzelnen Einrichtungen, Zubehörteile, Leitungen usw. sowie ihre relative Lage nicht maßstabsgerecht. Sie bieten jedoch dem Fachmann zur Verwirklichung der Erfindung eine vollständige Information.

Die aus Fig. 1 bzw. 2 ersichtlichen Prüfanlagen sind entsprechend der Betriebsarten a) und b) aufgebaut.

Die Anlage besteht in ihrem Wesen aus der Bodengruppe 12, die mindestens drei übereinander angeordnete Böden 13, 13/a, oder mindestens zwei Böden 13, 13/a und einen Luftstromverteiler 14 umfaßt, die übereinander angeordnet sind. Mit dem obersten Boden 13 der Bodengruppe 12 ist der Zulaufstutzen 7 verbunden. Die Bodengruppe 12 ist in einen Behälter 17 eingebaut, der über die Luftrohrleitung 19 und das Mengenmeßgerät 20 mit der Luftstromfördervorrichtung 18, z. B. einem Ventilator, in Verbindung steht. Der Behälter 17 weist den Ablaufstutzen 24 und im Falle der Betriebsart a) die Entleerungsleitung 22 auf. In dem obersten Boden 13, sowie dem untersten Boden 13/a der Bodengruppe 12 befinden sich die Fühler 15 sowie 15/a zur Messung der Konzentration, oder der von der Konzentration abhängigen physikalisch-chemischen Kennwerte, oder Probennehmer zu dem gleichen Zweck, sowie Stutzen 21/a-21/b zur Druckmessung. Letztere sind an das Druckdifferenzmeßgerät 21 angeschlossen.

Der Zulaufstutzen 7 steht bei der Prüfanlage aus Fig. 1 über die Tracerleitung 11 mit dem Tracer-Impulsdosiergefäß 9 in Verbindung. Das Tracer-Impulsdosiergefäß 9 ist mit einem Tracer-Einfüllstutzen 8 sowie einem Stutzen für Druckluft oder für ein Inertgas versehen. An den Flüssigkeitsspeicherbehälter 2 der Anlage zur Verwirklichung der Tracertechnik gemäß Fig. 1 ist die Wassereinfüllrohrleitung 1/a angeschlossen ; die Saugleitung 3 ist über die Förderpumpe 4 und die Druckleitung 5 sowie das Mengenmeßgerät 6 mit dem bereits erwähnten Zulaufstutzen 7 verbunden. In die Druckleitung 5 mündet die Wasserrohrleitung 1/b.

Die erwähnte Entleerungsleitung 22 ist an die Saugleitung 3 angeschlossen. Die Druckleitung 5 der Förderpumpe 4 ist über die Zirkulationsleitung 23 mit dem Flüssigkeits-Speicherbehälter 2 verbunden.

Die Einrichtungen 1-7 und 12-21 sowie 24 der Anlage zur Verwirklichung der Verdrängungstechnik gemäß Fig. 2 sind den entsprechenden Einrichtungen der Impulstechnik gleich, die bereits beschrieben worden sind. Darüberhinaus tragen nachstehende Einrichtungen zur Verwirklichung der Verdrängungstechnik noch bei (Fig. 2).

Der Tracerlösungs-Behälter 31, der einen Tracer-Einfüllstutzen 30 und einen Wassereinfüllstutzen 1/c aufweist, ist über die Saugleitung 32 mit der Förderpumpe 33 verbunden. Die Förderpumpe 33 ist mit der

Zirkulationsleitung 34 versehen, während die Tracerlösungs-Leitung 35 über das Flüssigkeitsmengenmeßgerät 6/a mit dem bereits erwähnten Zulaufstutzen 7 verbunden ist.

Das Flüssigkeitsverweilzeitspektrum wird bei der Anlage gemäß Fig. 1 mit Hilfe der Impulstechnik in folgender Weise bestimmt:

Der Flüssigkeitsspeicherbehälter 2 wird durch die Wassereinfüllrohrleitung 1/a mit Wasser gefüllt. Das Wasser wird durch die Förderpumpe 4, die Saugleitung 3, die Druckleitung 5 sowie den Zulaufstutzen 7 in die Bodengruppe 12 gefördert, während der Wasserdurchsatz durch das Mengenmeßgerät 6 gemessen wird. Das Wasser läuft dem obersten Boden 13 der Bodengruppe 12 zu. Von dort fließt es auf den darunterliegenden Boden 13/a, ferner auf den untersten Boden der Bodengruppe 12, im vorliegenden Falle durch den Luftstromverteiler 14, in den Behälter 17.

Im Falle einer Prüfung von Böden mit kleiner Flüssigkeitsbelastung wird das der Bodengruppe 12 zuzuleitende Wasser direkt durch die Wassereinfüllrohrleitungen 1/a und 1/b, also unter Ausschaltung des Flüssigkeitsspeicherbehälters 2, der Saugleitung 3 und der Förderpumpe 4, der Bodengruppe 12 zugeführt. Durch Einschalten der Luftstromfördervorrichtung 18 wird die Luft durch die Rohrleitung 19 gleichfalls in den Behälter 17 gedrückt. Von dort strömt sie durch die Böden 13 und 13/a hindurch, dann verläßt sie die Bodengruppe 12 und tritt ins Freie aus. Der Durchsatz der durch den Behälter 17 in die Bodengruppe 12 geleiteten Luft wird durch das in die Rohrleitung 19 eingebaute Mengenmeßgerät 20 gemessen. Nachdem zuvor von Hand der Durchsatz des durch das Mengenmeßgerät 6 hindurchfließenden, der Bodengruppe 12 zulaufenden Wassers sowie gleichfalls von Hand der Durchsatz der durch das Mengenmeßgerät 20 strömenden, der Bodengruppe 12 zuströmenden Luft eingestellt wurden, wird mindestens dreimal hintereinander der über den mittleren Boden, im vorliegenden Fall den Boden 13/a, der Bodengruppe 12 entstehende Druckabfall mit dem Druckdifferenzmeßgerät 21 gemessen, das über die Stutzen 21/a und 21/b mit der Bodengruppe 12 verbunden ist. Zeigt der zumindest dreimal hintereinander gemessene Druckabfall — bei gleichem Luft- und Wasserdurchsatz — einen konstanten Wert, so wird eine vorgegebene Menge des Tracerstoffes, die vorher durch den Tracer-Einfüllstutzen 8 in das Tracer-Impulsdosiergefäß 9 gefüllt wurde, mit Hilfe durch den Stutzen 10 in das Tracer-Impulsdosiergefäß 9 impuls- oder schlagartig zugeführter Druckluft oder irgendeines Inertgases durch die Tracer-Leitung 11 und den Zulaufstutzen 7 in den obersten Boden 13 der Bodengruppe 12 impulsartig eingeimpft.

Nach der Einimpfung des Tracerstoffes wird der physikalisch-chemische Kennwert der Flüssigkeit (z. B. der $P_H$-Wert, die Leitfähigkeit usw.), der zu der Tracerstoffkonzentration in jedem Zeitpunkt proportional ist, mittels des Meßgerätes 16 in entsprechenden, gegebenenfalls gleichen Zeitabschnitten nach der Einimpfung des Tracerstoffes gemessen. Das Meßgerät 16 ist mit den Fühlern 15 und 15/a verbunden, die in die dem obersten Boden der Bodengruppe zugeleitete, sowie in die vom untersten Boden herabließende Flüssigkeit, oder in die irgendeinem Boden der Bodengruppe zugeführte und von dem gleichen Boden herabfließende Flüssigkeit eintauchen.

Gemäß Fig. 1 tauchen der Fühler 15 in die dem obersten Boden 13 der Bodengruppe 12 zufließende Flüssigkeit und der Fühler 15/a in die vom Boden 13/a herabfließende Flüssigkeit ein.

Gegebenenfalls kann der physikalisch-chemische Kennwert der durch anstelle der Fühler 15 und 15/a eingebaute Probennehmer, die jeweils dieselbe Bezifferung haben, den Böden 13 und 13/a entnommenen Flüssigkeit auch nach einer anderen Methode (beispielsweise Titrieren) untersucht werden.

Als Tracerstoff kann insbesondere ein radioaktiver Stoff, ein Elektrolyt oder ein Farbstoff verwendet werden. Die Meßfühler 15, 15/a und das Meßgerät 16 sind in ihrer Art entsprechend an den verwendeten Tracerstoff angepaßt.

Das durch den Zulaufstutzen 7 eingeführte Wasser und der Tracerstoff sammeln sich in dem Behälter 17. Diese verdünnte Tracer-Lösung kann zum Abschluß einer Meßreihe mit Hilfe der Förderpumpe 4 durch die Zirkulationsleitung 23 dem Flüssigkeitsspeicherbehälter 2 zugeleitet werden, in dem sie zu weiteren Messungen bereit steht. Mittels der von der Druckleitung 5 abgezweigten Rezirkulationsleitung, die in den Speicherbehälter 2 zurückführt, kann man dessen Inhalt umwälzen und homogenisieren. Wenn man über eine längere Periode hin keine weiteren Messungen mehr durchführt, dann wird die in dem Behälter 17 gesammelte, gegebenenfalls zurückgebliebene Flüssigkeit durch den Ablaufstutzen 24 abgeführt und einer entsprechenden Abwasserbehandlung unterworfen.

Die darauffolgende Meßung nimmt man in der Weise vor, daß je ein größerer Durchsatz an Wasser, gegebenenfalls an verdünnter Tracer-Lösung, und an Luft, gemessen mit dem Mengenmeßgerät 6 und dem Mengenmeßgerät 20, als zuvor eingestellt werden, wobei das Verhältnis der Durchsätze (in m³/h) gleich dem in der ersten Meßreihe eingestellt sein soll. Im weiteren wird wie oben beschrieben vorgegangen. Eine Meßreihe soll zweckmäßigerweise mit je 5 verschiedenen Luft- und Wasserdurchsätzen vorgenommen werden.

Die Differenz der durch die Fühler 15/a und 15 sowie das Meßgerät 16, gegebenenfalls in den Proben, gewonnen mit Hilfe der Probennehmer 15/a und 15, in dem gleichen Zeitpunkt gemessenen Werte stellt man in Abhängigkeit von den gemessenen Zeitabschnitten graphisch dar. Auf diese Art wird das Verweilzeitspektrum dargestellt.

Das Verweilzeitspektrum wird anhand der Anlage gemäß Fig. 2 mit Hilfe der Verdrängungstechnik in folgender Weise bestimmt:

Den Flüssigkeitsbehälter 2 füllt man durch die Wassereinfüllrohrleitung 1/a mit Wasser. Das Wasser wird durch die Förderpumpe 4, die Saugleitung 3, die Druckleitung 5 sowie den Zulaufstutzen 7 in die Bodengruppe 12 gefördert, während der Wasserdurchsatz durch das Mengenmeßgerät 6 gemessen wird. Das Wasser strömt dem obersten Boden 13 der Bodengruppe 12 zu. Von dort fließt es auf den darunterliegenden Boden 13/a, ferner auf den untersten Boden der Bodengruppe 12, im vorliegenden Falle durch den Luftstromverteiler 14, in den Behälter 17.

Für den Fall einer Prüfung von Böden kleiner Flüssigkeitsbelastung kann man wie nach Fig. 1 die Möglichkeit versehen, das der Bodengruppe 12 zuzuleitende Wasser durch die Wassereinfüllrohrleitung 1/a und 1/b direkt, also unter Ausschaltung des Flüssigkeitsspeicherbehälters 2, der Saugleitung 3 und der Förderpumpe 4, in die Bodengruppe 12 gelangen zu lassen.

Durch Einschalten der Luftstromfördervorrichtung 18 wird die Luft durch die Rohrleitung 19 gleichfalls in den Behälter 17 gedrückt. Von dort strömt sie durch die Böden 13 und 13/a hindurch, dann verläßt sie die Bodengruppe 12 und tritt ins Freie aus. Der Durchsatz der über den Behälter 17 in die Bodengruppe 12 geleiteten Luft wird durch das in die Rohrleitung 19 eingebaute Mengenmeßgerät 20 gemessen.

Bevor der zu prüfende Boden gemessen wird, füllt man durch den Tracer-Einfüllstutzen 30 eine vorgegebene Menge des Tracerstoffes in den Tracerlösungs-Behälter 31 ; dann wird er mit Wasser durch die Wassereinfüllrohrleitungen 1/a und 1/c verdünnt. Die auf diese Art zubereitete Tracerlösung läßt sich mit Hilfe der Förderpumpe 33, durch die die Lösung durch die Saugleitung 32 und die Zirkulationsleitung 34 in den Tracerlösungs-Behälter 31 zurückgefördert wird, homogenisieren.

Nachdem zuvor von Hand der Durchsatz des durch das Mengenmeßgerät 6 fließenden, der Bodengruppe zugeführten Wassers sowie, gleichfalls von Hand, der Durchsatz der durch das Mengenmeßgerät 20 der Bodengruppe 12 zugeführten Luft eingestellt wurde, wird mindestens dreimal hintereinander der über dem mittleren Boden, im vorliegenden Fall dem Boden 13/a der Bodengruppe 12, entstehende Druckabfall mit dem Differenzendruckmeßgerät 21 gemessen, das über die Stutzen 21/a und 21/b mit der Bodengruppe 12 verbunden ist. Zeigt der zumindest dreimal hintereinander gemessene Druckabfall bei gleichem Luft- und Wasserdurchsatz einen konstanten Wert, so wird in entsprechenden, gegebenenfalls gleichen Zeitabschnitten der physikalischchemische Kennwert (z. B. der $P_H$-Wert, die Leitfähigkeit, usw.) des zugeleiteten Wassers mit Hilfe des Meßgerätes 16, welches mit dem in die vom Boden 13/a herabfließende Flüssigkeit eintauchenden Fühler 15/a verbunden ist, gemessen. Gegebenenfalls kann der physikalisch-chemische Kennwert der durch anstelle des Fühlers 15/a eingebaute Probennehmer 15/a dem Boden 13/a entnommenen Flüssigkeit auch nach einer anderen Methode (z. B. Titrieren) untersucht werden. Zum gleichen Zeitpunkt, in dem die Förderpumpe abgestellt und die entsprechenden Absperrorgane geschlossen werden, setzt man die Förderpumpe 33 in Betrieb, durch die die bereits homogenisierte Tracerlösung — bei bereits geöffneten, entsprechenden Absperrorganen — durch die Tracerlösungs-Leitung 35, das Mengenmeßgerät 6/a, sowie den Zulaufstutzen 7 auf den obersten Boden 13 der Bodengruppe 12 gefördert wird. Der Durchsatz der durch die Tracerlösungs-Leitung 35 strömenden Flüssigkeit ist mit Hilfe der entsprechenden Absperrorgane dermaßen einzustellen, daß das Flüssigkeitsmengenmeßgerät 6/a den gleichen Wert anzeigt, wie das Mengenmeßgerät 6 bei dem Betrieb der Bodengruppe mit Wasser.

Danach wird der physikalisch-chemische Kennwert der Tracerlösung mit Hilfe des Fühlers 15/a sowie des Meßgerätes 16, bzw. anhand einer Analyse der mit dem Probennehmer 15/a entnommenen Probe gemessen.

Das Wasser und die Tracerlösung, die durch den Zulaufstutzen 7 eingeführt worden sind, sammeln sich in den Behälter 17. Diese verdünnte Tracerlösung wird zum Abschluß einer Meßreihe über den Ablaufstutzen 24 abgeführt und einer entsprechenden Abwasserbehandlung unterworfen.

Die darauffolgenden Messungen nimmt man in der Weise vor, daß je ein größerer Durchsatz, gemessen mit dem Mengenmeßgerät 6 und dem Mengenmeßgerät 20, als zuvor eingestellt werden, wobei das Verhältnis der Durchsätze (in $m^3/h$) gleich dem in der ersten Meßreihe eingestellt sein soll. Im weiteren wird, wie oben beschrieben, vorgegangen. Eine Meßreihe soll zweckmäßigerweise mit je 5 verschiedenen Luft- und Wasserdurchsätzen vorgenommen werden.

Aus dem Wesen der Verdrängungstechnik folgt, daß der physikalisch-chemische Kennwert, der mit Hilfe des auf irgendeinem Boden der Bodengruppe einzusetzenden Fühlers 15 sowie des Meßgerätes 16, gegebenenfalls einer Analyse der mit dem Probennehmer 15 entnommenen Flüssigkeit, jeweils während des Zeitraums des Zuführens des Wassers und dann der Tracerlösung bestimmt werden kann, sich nur mit dem oben bereits erwähnten Umschalten von Wasser auf die Tracerlösung ändert. In Fig. 2 taucht der Fühler 15 in die dem obersten Boden 13 der Bodengruppe 12 zugeleitete Flüssigkeit ein. Demgegenüber wird der physikalisch-chemische Kennwert der vom untersten Boden der Bodengruppe 12, im vorliegenden Fall vom Boden 13/a, herabfließenden Flüssigkeit mit dem Fühler 15/a sowie dem Meßgerät 16 sowohl während des Betriebes mit Wasser, als auch nach dem bereits dargelegten Umschalten auf die Tracerlösung fortlaufend, in gleichen Zeitabständen gemessen. Gegebenenfalls können der physikalisch-chemische Kennwert des Wassers und dann nach der Umschaltung der der Tracerlösung anhand einer Analyse der mit dem Probennehmer 15/a entnommenen Flüssigkeit gemessen werden. Die durch den Fühler 15/a und das Meßgerät 16 gemessenen, bzw. anhand einer Analyse des mit dem Probennehmer entnommenen Wassers und der Tracerlösung sich ergebenden Meßwerte stellt man in Abhängigkeit von den Meßzeitabständen graphisch dar. Auf diese Art wird das Verweilzeitspektrum dargestellt.

Die Erfindung wird nachstehend anhand eines Beispiels für die Impulstechnik erläutert.

### Beispiel

Zum Zweck einer atmosphärischen Destillation wurde eine Kolonne gebaut. Ihre theoretische Bodenzahl betrug

in der Rektifiziersäule : $(N_{th})_1 = 15$,

in der Abtriebssäule : $(N_{th})_2 = 12$,

insgesamt also : $N_{th} = (N_{th})_1 + (N_{th})_2 = 15 + 12 = 27$

Die in den Kolonnenabschnitten strömenden Dampf- und Flüssigkeitsdurchsätze ergaben sich wie folgt aus den ttheoretischen Berechnungen

in der Rektifiziersäule : $(V_D)_1 = 1,317 \cdot 10^3$ m³/h

$(V_F)_1 = 2,195$ m³/h

in der Abtriebssäule : $(V_D)_2 = 1,493 \cdot 10^3$ m³/h

$(V_F)_2 = 4,256$ m³/h

Weitere, für die Kolonnenabschnitte zugrundezulegende Angaben waren für die Rektifiziersäule :

Bezugstemperatur : $T_1 = 359$ $K_1$

Molmasse : $M_1 = 41,6$ kg/Mol

für die Abtriebssäule :

Bezugstemperatur : $T_2 = 370$ $K_1$

Molmasse : M2 = 19,5 kg/Mol.

Nach überschlägigen Berechnungen wurde für die beiden Kolonnenabschnitte der gleiche Glockenboden mit dem Durchmesser von 750 mm gewählt. Auf allen Böden sind jeweils 18 Glocken (Glockendurchmesser 90 mm) untergebracht. Die Einzelheiten des gewählten Glockenbodens findet man in der Literatur (E. Kirschbaum : Chemie Ing. Technik, *26*, 1954, Nr. 8/9 S. 461).

Wie rechnerisch nachgewiesen, werden die Schlitze sämtlicher Glocken in beiden Kolonnenabschnitten infolge der Dampfströmung völlig « geöffnet ».

Um den Wirkungsgrad der gewählten Böden mit Luft-Wasser messen zu können, wurde in einer Prüfanlage eine Bodengruppe aus

$$n_{eff} = 3$$

Böden hydraulisch untersucht.

Sie wurden zur Ermittlung der effektiven Bodenzahl in der Rektifiziersäule der Kolonne mit dem Luftdurchsatz von $1,317 \cdot 10^3$ m³/h sowie dem Wasserdurchsatz von 2,195 m³/h beaufschlagt.

In den der Bodengruppe zugeleiteten Wasserdurchsatz ist stoßartig wässerige NaCl-Lösung (20 %) eingeimpft worden. Es wurde dabei die elektrische Leitfähigkeit des gelösten Kochsalzes in Zeitabständen gemessen. Durch die gemessenen Angaben ergab sich in dem Koordinatensystem Leitfähigkeit über der Zeit je ein Verweilzeitspektrum. Von den Verweilzeitspektren, die im vom untersten Boden abfließenden und in dem dem obersten Boden zugeführten Wasser aufgenommen wurden, konnten

$$(\Delta t)_1 = 169 \text{ s} \quad \text{und} \quad (\Delta tm)_1 = 94 \text{ s}$$

abgelesen werden. Dabei sind

$\Delta t$ die Differenz der Mittelwerte der Verweilzeitspektren, gemessen in dem vom untersten Boden abfließenden und in dem dem obersten Boden zugeleiteten Wasser,

$\Delta t_m$ die Differenz der Lagen der Maxima der Verweilzeitspektren, gemessen wie oben.

Die effektive Bodenzahl der Rektifiziersäule für Luft-Wasser wurde zu

$$(N_{eff})_1 = \frac{(N_{th})_1}{(\eta)_1} = (N_{th})_1 \frac{(n_{eff})_1}{(n_{th})_1} =$$

$$= (N_{th})_1 \left(1 - \frac{\Delta tm}{\Delta t}\right) (n_{eff})_1 =$$

$$= 15' \left(1 - \frac{94}{169}\right) \cdot 3 \approx 20$$

errechnet, wobei

$N_{eff}$ die effektive Bodenzahl eines Kolonnenabschnittes oder einer Kolonne

$n_{th}$ die theoretische Bodenzahl der Bodengruppe und

$\eta$ der Wirkungsgrad der Bodengruppe (K. Pippel : Chemische Technik, 17, 1965, Nr. 12.5.729-738) sind.

Die gleiche Bodengruppe wurde wie oben auch zur Ermittlung der effektiven Bodenzahl der Abtriebssäule beibehalten. Dieser wurden $1,493 \cdot 10^3$ m³/h Luft und 4,256 m³/h Wasser zugeleitet. Der Wirkungsgrad der Bodengruppe wurde also diesmal unter größeren Belastungen als für die Rektifiziersäule, jedoch in der gleichen Weise bestimmt. Von den aufgenommenen Verweilzeitspektren ließen sich

$$(\Delta t)_2 = 149 \, s \quad und \quad (\Delta tm)_2 = 79 \, s$$

ablesen. Die effektive Bodenzahl in der Abtriebssäule für Luft-Wasser ergab sich daraus zu

$$(N_{eff})_2 = 12 \cdot \left(1 - \frac{79}{149}\right) \cdot 3 = 16,91 \approx 17$$

Die Gesamtzahl der effektiven Böden in der ganzen Kolonne (ohne Sicherheitszuschlag) betrug also

$$N_{eff} = (N_{eff})_1 + (N_{eff})_2 = 20 + 17 = 37 \, .$$

Der durchschnittliche Bodenwirkungsgrad für Luft-Wasser wäre folglich :
in der Rektifiziersäule :

$$(\eta)_1 = \frac{15}{20} = 0,750$$

in der Abtriebssäule :

$$(\eta)_2 = \frac{12}{17} = 0,706$$

Die für Luft-Wasser gültigen Wirkungsgrade konnten durch die Methode von Bankovski (Chem. Eng. Sci. 1, 1957, S. 266) auf das zu trennende Gemisch umgerechnet werden. Zur Umrechnung braucht man zusätzlich die Molmasse der Luft : 29 kg/Mol sowie die durchschnittliche Lufttemperatur : 293 K.

Infolge der « geöffneten » Schlitze konnte die Umrechnungsmethode in nachstehenden Formen benutzt werden :
in der Rektifiziersäule :

$$\log \frac{1}{1 - (\eta)_1} = \log \frac{1}{1 - 0,750} \cdot \left(\frac{293}{359}\right)^{0,5} \cdot \left(\frac{41,6}{29}\right)^{0,5}$$

in der Abtriebssäule :

$$\log \frac{1}{1 - (\eta)_2} = \log \frac{1}{1 - 0,706} \cdot \left(\frac{293}{370}\right)^{0,5} \cdot \left(\frac{19,5}{29}\right)^{0,5}$$

Die Umrechnung führte zum Endergebnis
in der Rektifiziersäule :

$$= \frac{15}{0,777} \approx 20$$

$$\eta_1 = 0,777 \quad und \quad (N_{eff})_1$$

in der Abtriebssäule :

$$\eta_2 = 0,59 \quad und \quad (N_{eff})_2 = \frac{12}{0,59} \approx 21$$

Die für das zu trennende Gemisch gültige effektive Bodenzahl der ganzen Kolonne ist deshalb ohne Sicherheitszuschlag

$$N_{eff} = 20 + 21 = 41 .$$

Die Erfindung führt, wie durch das angeführte Beispiel für zwei Kolonnenabschnitte bewiesen, zu einem Resultat, welches nunmehr auf Meßdaten beruht und welches keine aufwendige Rechenarbeit erfordert.

Wird die Verdrängungstechnik angewendet, so zeigt die zeitliche Änderung der Konzentration bzw. des davon abhängigen Kennwertes eine sogenannte Übergangsfunktion. Da zwischen der Übergangsfunktion und dem Verweilzeitspektrum bekanntlich eine Beziehung besteht, kann die Übergangsfunktion in ein Verweilzeitspektrum überführt werden. Danach wird wie im Beispiel gezeigt verfahren.

**Patentansprüche**

1. Prüfanlage für die Vorausbestimmung des Wirkungsgrades der Böden gleicher Geometrie und/oder gleicher Belastung von Destillier- und/oder Absorptionskolonnen, mit einer Bodengruppe (12) aus wenigstens zwei Böden (13, 13a) und einem Luftstromverteiler (14) oder, vorzugsweise, aus wenigstens drei Böden gleicher Geometrie, an die eine mit einem Mengenmeßgerät (6) versehene Wassereinfüllrohrleitung (1/a) angeschlossen ist, ferner mit einem die Bodengruppe (12) umfassenden Behälter (17), der über ein Mengenmeßgerät (20) mit einer Luftquelle (18) verbunden ist und der mit einem Ablaufstutzen (24) sowie einem Druckdifferenzmeßgerät (21) versehen ist, dadurch gekennzeichnet, daß der Zulaufstutzen (7) mit einer Tracer-Leitung (11) oder mit einer Tracerlösungs-Leitung (35) verbunden ist und daß die Bodengruppe (12) mit an ein Meßgerät (16) angeschlossenen Meßelektroden oder mit Probennehmern (15, 15a) in einer Anordnung für ein Messen des Verweilzeitspektrums des zugeführten Tracerstoffes auf wenigstens einem Boden der Bodengruppe (12) versehen ist.

2. Prüfanlage nach Anspruch 1, dadurch gekennzeichnet, daß an den Zulaufstutzen (7) eine Tracer-Leitung (11) angeschlossen ist, die mit einen Tracer-Impulsdosiergerät (9) mit einem Tracer-Einfüll-stutzen (8) verbunden ist.

3. Prüfanlage nach Anspruch 2, dadurch gekennzeichnet, daß an das Tracer-Impulsdosiergerät (9) ein Stutzen (10) für Druckluft oder ein Inertgas angeschlossen ist.

4. Prüfanlage nach Anspruch 1, dadurch gekennzeichnet, daß an den Zulaufstutzen (7) eine mit einer Förderpumpe (33) versehene Tracerlösungs-Leitung (35) angeschlossen ist, die mit einem Tracerlösungs-Behälter (31), der einen Tracer-Einfüllstutzen (30) aufweist, verbunden ist.

5. Prüfanlage nach Anspruch 4, dadurch gekennzeichnet, daß die Saugseite der Förderpumpe (33) zum Fördern der Tracerlösung über eine Saugleitung (32) an den Tracerlösungs-Behälter (31) angeschlossen ist und die Druckseite der Förderpumpe (33) über die mit einem Flüssigkeitsmengenmeßgerät (16/a) versehene Tracerlösungs-Leitung (35) an den Zulaufstutzen (7), und über eine Zirkulationsleitung (34) an den Tracerlösungs-Behälter (31) angeschlossen ist.

6. Prüfanlage nach Anspruch 4 oder 5, dadurch gekennzeichnet, daß der Tracerlösungs-Behälter (31) einen Wassereinfüllstutzen (1/c) aufweist.

7. Prüfanlage nach einem der Ansprüche 1 bis 6, dadurch gekennzeichnet, daß an den Zulaufstutzen (7) der Bodengruppe (12) ein mit einer Wassereinfüllrohrleitung (1/a) versehener Flüssigkeitsspeicherbehälter (2), bzw. ein Tracerlösungs-Behälter (31) angeschlossen ist.

8. Prüfanlage nach Anspruch 7, dadurch gekennzeichnet, daß der Flüssigkeitsbehälter (2) bzw. Tracerlösungs-Behälter (31) über eine Saugleitung (3, 32), eine Förderpumpe (4, 33), eine Druckleitung (5, 35) und ein Mengenmeßgerät (6, 6a) an den Zulaufstutzen (7) der Bodengruppe (12) angeschlossen ist.

9. Prüfanlage nach einem der Ansprüche 1 bis 8, dadurch gekennzeichnet, daß die Bodengruppe (12) gegen eine solche mit anderen Abmessungen und/oder Anordnungen ihrer Böden (13, 13a) und ihres Luftstromverteilers (14) austauschbar ausgebildet ist.

**Claims**

1. Testing apparatus for predetermining the efficiency of distillation and/or adsorption column plates of identical geometry and/or identical loading, comprising a group of plates (12) consisting of at least two plates (13, 13a) and of an air stream distributor (14) or, preferably, consisting of a group of at least three plates of the same geometry to which is connected a water-charging duct (1/a) provided with a volume measuring device (6), and additionally a container (17) which surrounds the group of plates (12), which is connected with a source of air (18) *via* a volume measuring device (20) and which is provided with a discharge pipe (24) as well as a differential pressure measuring device (21), characterised in that the intake pipe (7) is connected with a duct (11) for tracer or with a duct (35) for tracer solution, and that the group of plates (12) is provided with measuring electrodes connected to a measuring device (16) or with sampling devices (15, 15a) in an arrangement for measuring the residence time spectrum of the supplied tracer at least one plate of the group of plates (12).

2. Testing apparatus according to claim 1, characterised in that a duct (11) for tracer is connected to the intake pipe (7) and is coupled to a pulsed dosing device (9) for tracer provided with a tracer filling pipe (8).

3. Testing device according to claim 2, characterised in that a pipe (10) for compressed air or inert gas is connected to the pulsed tracer-dosing device (9).

4. Testing apparatus according to claim 1, characterised in that a duct (35) for tracer solution fitted with a feed pump (33) is connected to the intake pipe (7) and is coupled with a container (31) for tracer solution that has a tracer fill pipe (30).

5. Testing apparatus according to claim 4, characterised in that the suction side of the feed pump (33) is connected *via* a suction duct (32) for delivery of tracer solution to the tracer solution container (31), and the delivery side of the feed pump (33) is connected *via* the tracer solution duct (35), which is fitted with a flow meter (16/a), to the intake pipe (7) and to the tracer solution container (31) *via* a circulation duct (34).

6. Testing device according to claims 4 or 5, characterised in that the tracer solution container (31) has a water fill pipe (1/c).

7. Testing apparatus according to one of claims 1 to 6, characterised in that the intake pipe (7) of the group of plates (12) is connected with a liquid storage container (2) provided with a water fill pipeline (1/a) or with a tracer solution container (31).

8. Testing device according to claim 7, characterised in that the liquid container (2) or the tracer solution container (31) is connected *via* a suction duct (3, 32), a feed pump (4, 33), a pressure duct (5, 35) and a volume-measuring device (6, 6a) to the intake pipe (7) of the group of plates (12).

9. Testing device according to claims 1 to 8, characterised in that the group of plates (12) is constructed for exchange with another group of plates having different dimensions and/or different arrangements of their plates (13, 30a) and air stream distributors (14).

## Revendications

1. Installation d'essai pour déterminer à l'avance le rendement des plateaux de même géométrie et/ou de même charge de colonnes de distillation ou d'absorption, comportant un groupe de plateaux (12) constitué d'au moins deux plateaux (13, 13a) et d'un diffuseur d'air (14) ou, de préférence, d'au moins trois plateaux de même géométrie auxquels est raccordée une canalisation de remplissage en eau (1/a) munie d'un débitmètre (6), comportant en outre un réservoir (17) qui contient le groupe de plateaux (12), est relié à une source d'air (18) par l'intermédiaire d'un débitmètre (20) et présente une tubulure d'évacuation (24) ainsi qu'un manomètre différentiel (21) caractérisée en ce que la tubulure d'alimentation (7) est reliée à une conduite de traceur (11) ou à une conduite de solution de traceur (35) ; et en ce que le groupe de plateaux (12) comporte, sur au moins un plateau du groupe de plateaux (12), des électrodes de mesure reliées à un appareil de mesure (16) ou des préleveurs d'échantillons (15, 15a) dans une disposition permettant la mesure du spectre du temps de séjour du traceur introduit.

2. Installation d'essai selon la revendication 1, caractérisée en ce qu'à la tubulure l'alimentation (7) est reliée une conduite de traceur (11) reliée à un appareil de dosage du traceur par impulsions (9) muni d'une tubulure de remplissage en traceur (8).

3. Installation d'essai selon la revendication 2, caractérisée en ce qu'à l'appareil de dosage du traceur par impulsions (9) est reliée une tubulure (10) pour de l'air comprimé ou un gaz inerte.

4. Installation d'essai selon la revendication 1, caractérisée en ce qu'à la tubulure d'alimentation (7) est reliée une conduite de solution de traceur (35) comportant une pompe d'alimentation (33) et reliée à un réservoir de solution de traceur (31) qui présente une tubulure de remplissage en traceur (30).

5. Installation d'essai selon la revendication 4, caractérisée en ce que le côté aspiration de la pompe d'alimentation (33) est relié pour pouvoir amener la solution de traceur, au réservoir de solution de traceur (31) par l'intermédiaire d'une conduite d'aspiration (32) ; et en ce que le côté refoulement dans la pompe d'alimentation (33) est relié, par l'intermédiaire de la conduite de solution de traceur (35), munie d'un débitmètre pour liquide (16/a), à la tubulure d'alimentation (7), et, par l'intermédiaire d'une conduite de circulation (34), au réservoir de solution de traceur (31).

6. Installation d'essai selon la revendication 4 et la revendication 5, caractérisée en ce que le réservoir (31) de solution de traceur présente une tubulure de remplissage en eau (1/c).

7. Installation d'essai selon l'une des revendications 1 à 6, caractérisée en ce qu'à la tubulure d'alimentation (7) du groupe de plateaux (12) est raccordé un réservoir (2) de stockage de liquide muni d'une canalisation de remplissage en eau (1/a) ou un réservoir (31) de solution de traceur.

8. Installation d'essai selon la revendication 7, caractérisée en ce que le réservoir de liquide (2) ou le réservoir de solution de traceur (31) est raccordé à la tubulure d'alimentation (7) du groupe de plateaux (12) par l'intermédiaire d'une conduite d'aspiration (3, 32) d'une pompe d'alimentation (4, 33), d'une conduite sous pression (5, 35) et d'un débitmètre (6, 6a).

9. Installation d'essai selon l'une des revendications 1 à 8, caractérisée en ce que le groupe de plateaux (12) est conçu de façon à pouvoir être échangé contre un tel groupe de plateaux de dimensions différentes et/ou de dispositions différentes de ses plateaux (13, 13a) et de son diffuseur d'air (14).

Fig.1

0 078 268

Fig.2